# EUROPEAN PATENT SPECIFICATION

(11) **EP 2 050 666 B1**
(45) Date of publication and mention of the grant of the patent: **09.12.2015**
(21) Application number: 08161310.1
(22) Date of filing: 29.07.2008
(51) Int. Cl.: B62J 35/00, B60K 15/04, B29C 49/20, B29C 45/14

(54) **Fuel filler structure of fuel tank**
Brennstoffeinfüllstruktur für einen Brennstofftank
Structure de remplissage de carburant dans un réservoir de carburant

(30) Priority: 19.10.2007 JP 2007273221
(43) Date of publication of application: 22.04.2009
(73) Proprietor: Honda Motor Co., Ltd., Tokyo 107-8556 (JP)
(72) Inventor: Muto, Kenji, Saitama 351-0193 (JP); Nakajima, Jun, Saitama 351-0193 (JP)
(74) Representative: Rupp, Christian

(56) References cited:
- EP-A2- 1 081 034
- EP-A2- 1 190 884
- DE-A1- 2 210 693
- DE-A1- 4 205 332
- JP-A- S 613 521
- JP-A- 9 286 367
- JP-A- H06 143 393
- JP-A- 2007 302 156
- US-A- 5 752 553
- US-B1- 6 193 924
- US-B1- 6 527 892

## Description

The present invention relates to a resin fuel tank used in a motorcycle and the like, and more particularly, to a fuel filler structure of the resin fuel tank.

A fuel tank molded entirely of a resin, and having a metallic level plate inserted in a fuel filler thereof is publicly known.
Japanese Patent Application Publication No. Hei 8-198161

Meanwhile, mounting a metallic level plate in a fuel filler made of a resin as in the publicly known example improves toughness against falling down, but requires a structure for preventing looseness or fuel leakage. The structure for preventing fuel leakage requires, in addition to a packing of a fuel cap, a dedicated seal to be provided between a level plate and an upstanding portion, as well as a pressing cap for fixing the level plate. This results in an increase in the number of components and complicated structure. Also, since the level plate is provided separately from the upstanding portion, precise positioning of the level plate is burdensome. An object of the present invention is to solve such problem.

Document US 6527892 B1 discloses a fuel tank structure according to the preamble of claim 1 and is considered as the closest prior art concerning the method for producing such tank according to claim 6.

The invention is defined by the appending claims.

An aspect of the present invention is a fuel filler structure of a fuel tank, including: an upstanding portion provided integrally to a resin fuel tank molded by blow molding, the upstanding portion standing upright in a cylindrical form; and a fuel filler provided in the upstanding portion. The fuel filler structure is further defined in that the upstanding portion is formed by insert molding of a separate fuel filler component in an integral manner at the time of the blow molding of the tank, and the fuel filler component integrally includes a level plate portion extending downward below an upper surface of the tank.

Another aspect of the present invention is that the fuel filler component is fabricated of a resin material by injection molding, and a metallic ring is cast into the fuel filler component during the injection molding.

The fuel filler component integrated with the level plate portion is formed in advance separately from the fuel tank. The fuel filler component is integrated into the inside of the upstanding portion by insert molding at the time of molding the fuel tank. Accordingly, the need for a pressing cap for securing, and a seal is eliminated. This allows the level plate to be formed in a simple structure with no looseness occurring, as well as achieves precise positioning of the level plate.
In addition, the metallic ring is inserted into the fuel filler component, thereby enhancing toughness against falling down.
Fig. 1 is a side view of a motorcycle provided with a fuel tank according to the present invention.
Fig. 2 is a side view of a first fuel tank.
Fig. 3 is a plan view of the first fuel tank.
Fig. 4 is a partially-enlarged cross-sectional view of a fuel filler with a fuel cap attached thereto.
Fig. 5 is a cross-sectional view taken along the line 5-5 in Fig. 3.
Fig. 6 is a view for describing a method for molding an upstanding portion.

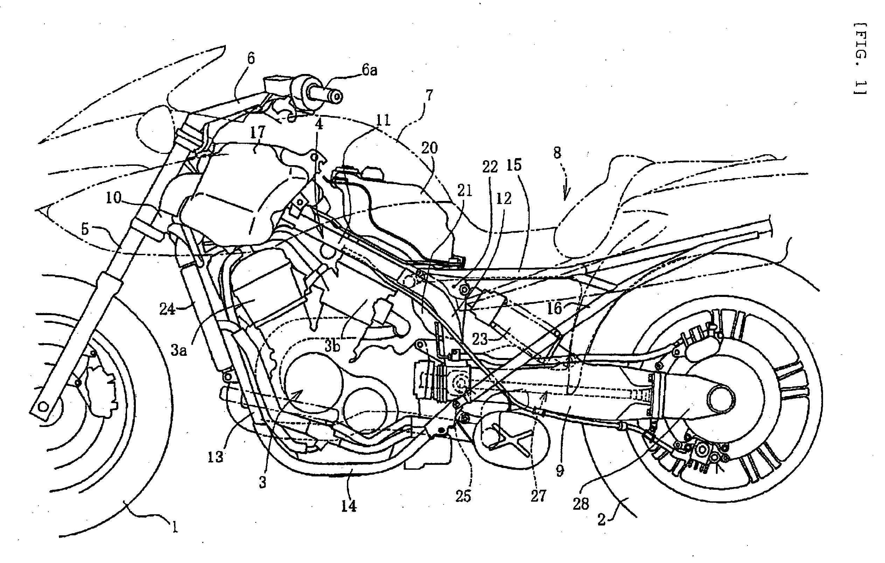

An embodiment will be described below with reference to the drawings. Fig. 1 is a side view of a motorcycle provided with a fuel tank according to the present invention. In the motorcycle, a power unit 3 is disposed between a front wheel 1 and a rear wheel 2 and supported by a vehicle body frame 4. Reference numeral 5 denotes a front fork, 6 denotes a handlebar, 7 denotes a tank cover, 8 denotes a seat, and 9 denotes a rear arm.

Grips 6a of the handlebar 6 are located above the top of the tank cover 7, and extend long rearward to reach positions above the bank space between a front cylinder 3a and a rear cylinder 3b.

The vehicle body frame 4 includes: a head pipe 10 supporting the front wheel 1 with the front fork 5 in between; main pipes 11 extending rearward above the power unit 3 from the head pipe 10; center pipes 12 disposed vertically behind the power unit 3; down pipes 13 extending downward in front of the power unit 3 from the head pipe 10; and lower pipes 14 disposed in the front-rear direction below the power unit 3. These pipes are continuously connected with each other so as to form a loop in which the power unit 3 is supported. Seat rails 15 extend rearward, and substantially horizontally, each from a vicinity of the connecting portion of the main pipe 11 and the center pipe 12. Also, the vehicle body frame 4 is provided with back stays 16 connecting obliquely between the center pipes 12 and the seat rails 15.

The front fork 5 is rotatably supported by the head pipe 10. The main pipes 11 are connected at the front end portions thereof to the head pipe 10, while the down pipes 13 are connected at the upper end portions thereof to the head pipe 10. An air cleaner 17 is supported, behind the head pipe 10, and in vicinities of the front end portions of the main pipes 11. A first fuel tank 20 is supported, behind the air cleaner 17, by the intermediate portions, in the front-rear direction, of the main pipes 11, and by the front portions of the seat rails 15.

A second fuel tank 21 is supported by the seat rails 15 behind and below the first fuel tank 20. The second fuel tank 21 is housed in a space surrounded by the center pipes 12, the seat rails 15, and the back stays 16. The front portion of the second fuel tank 21 vertically overlaps a part of the first fuel tank 20.

Each center pipe 12 is provided with, at a shoulder portion in an upper portion thereof, a stay 22 projecting upward and rearward, the shoulder portion being in a vicinity of a part at which the center pipe 12 is bent forward to be connected with the main pipe 11. A cushion unit 23 constituting a rear suspension is supported, at the upper portion thereof, by the stay 22. The stay 22 is disposed to be offset to the left of the vehicle body. The cushion unit 23 is slanted downward and extends rearward on the left side of the vehicle body, and is supported, at the lower end portion thereof, by the intermediate portion of the rear arm 9.

The power unit 3 includes a water-cooled, four-cycle, V engine having the front cylinder 3a and the rear cylinder 3b. The first fuel tank 20 is located above the rear-bank cylinder 3b. A radiator 24 is supported by the down pipes 13. Reference numeral 25 denotes a pivot shaft, which is provided at the intermediate portions, in the vertical direction, of the center pipes 12.

The rear arm 9 is vertically swingably supported, at the front end portion thereof, by the pivot shaft 25 provided at the intermediate portions, in the vertical direction, of the center pipes 12. The rear arm 9 supports, only at the right side of the rear end portion thereof, the rear wheel 2, like a cantilever.
The drive system of the rear wheel 2 is a shaft drive system. The rotational output of the power unit 3 is transmitted via a shaft drive mechanism 27 to a gear box 28 formed in a left portion of the rear end portion of the rear arm 9, so that the rear wheel 2 rotates.

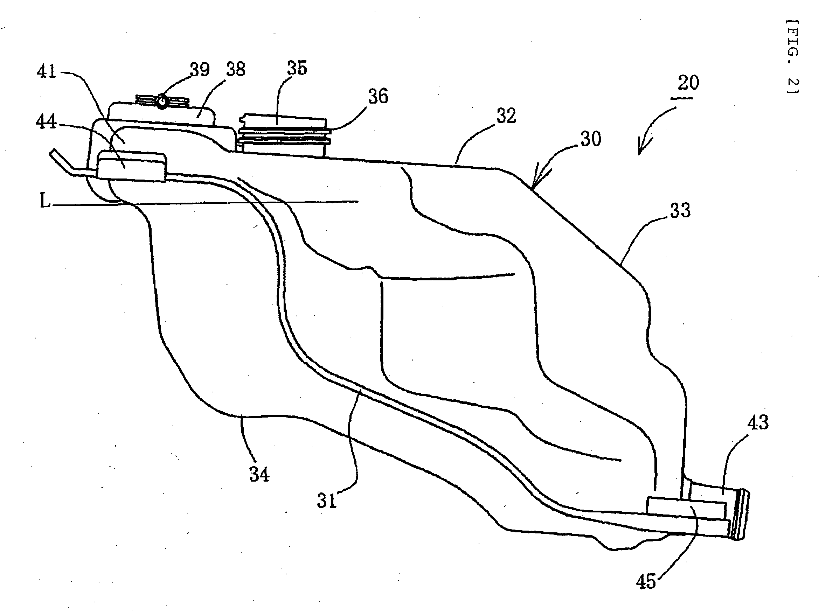

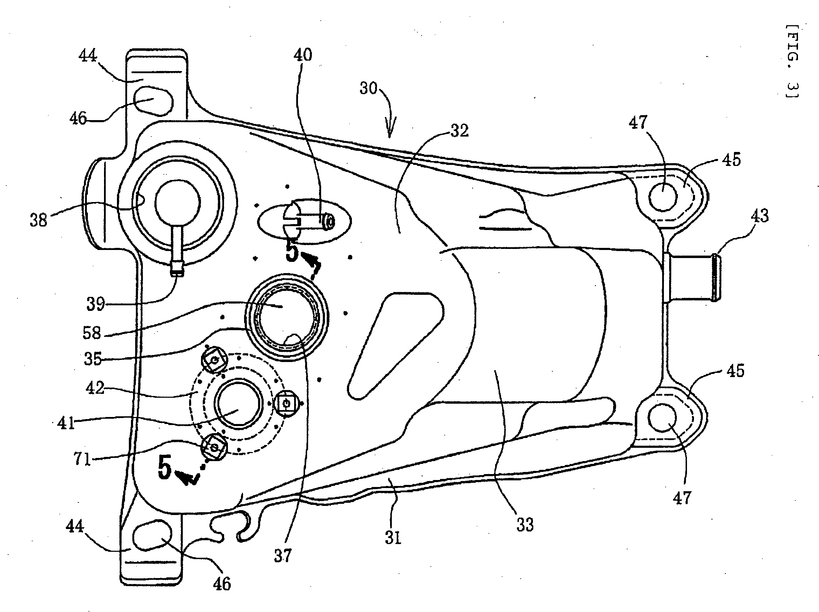

Next, the first fuel tank 20 will be described. Fig. 2 is a side view of the first fuel tank 20, and Fig. 3 is a plan view thereof. The first fuel tank 20 is wholly formed by blow molding using an appropriate thermoplastic resin made of polyethylene or the like, and has a hollow main body 30 and a flange 31 formed on, and project from, all the periphery of the side surface of the main body 30.

The main body 30 includes, in the upper portion thereof, a flat portion 32 and a back face portion 33 slanted downward, and includes, in the lower portion thereof, a bottom portion 34 slanted downward substantially as a whole.
A cylindrical upstanding portion 35 is formed integrally at the center of the flat portion 32. The upstanding portion 35 has a male thread 36 formed therearound, and has the upper end portion opened to serve as an opening portion 37 of a fuel filler (see Fig. 3).

A breather portion 38 is provided on the right side of the front portion of the flat portion 32, and has a breather tube 39 projecting to the left of the vehicle body. A nozzle 40 projecting rearward is integrally formed behind the breather portion 38, and to the right of the upstanding portion 35. The nozzle 40 is an air bleed hole and communicates with the second fuel tank 21 via an unillustrated tube.
A mounting hole 41 for mounting a fuel sensor (not illustrated) is provided in the left side of the front portion of the flat portion 32 and has a mounting seat 42 provided therearound, on which the unillustrated fuel sensor is mounted.

The main body 30 has a pipe 43 formed to project rearward at the rear end portion thereof, and connected with the second fuel tank 21 with an unillustrated hose so as to allow the fuel in the first fuel tank 20 to be dropped into the second fuel tank 21.

As shown in Fig. 3, the flange 31 provided around the main body 30 has front and rear, right and left corner portions projecting outward to form front mounting portions 44 and rear mounting portions 45. The front mounting portions 44 are bolted, with oval holes 46 formed therein, to the upper surfaces of the main pipes 11, while the rear mounting portions 45 are bolted, with circular holes 47 formed therein, to the upper surfaces of the front portions of the seat rails 15 for installation on the frame. The mounting of the first fuel tank 20 is adjusted with the front mounting portions 44.

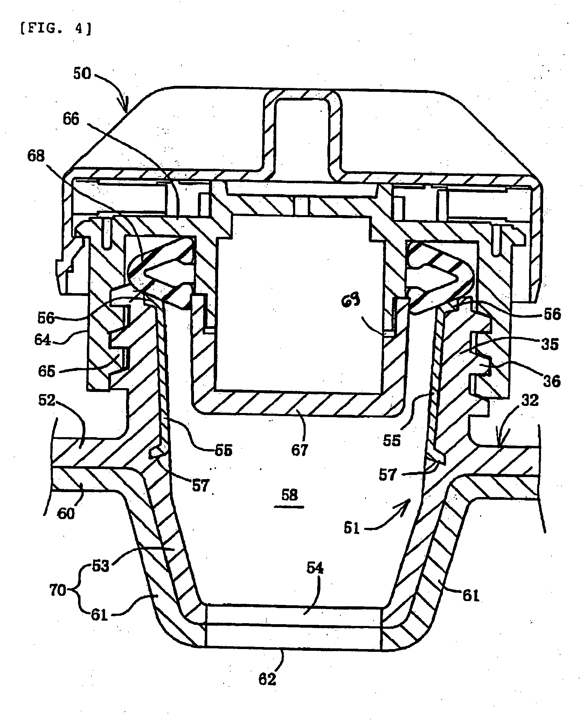

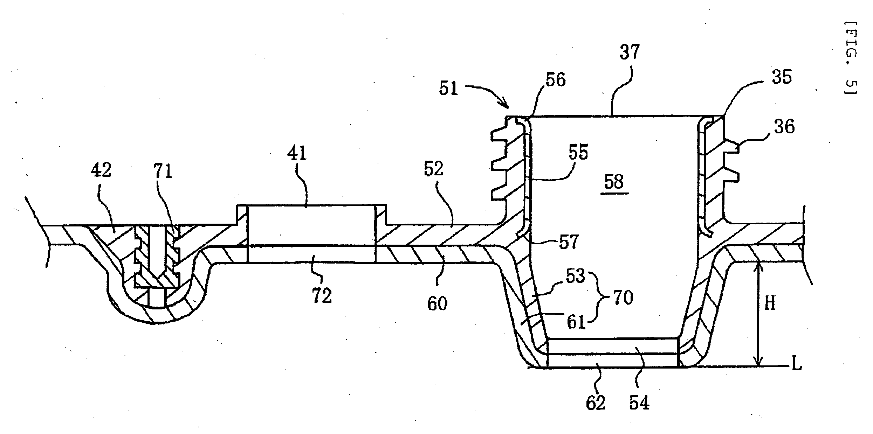

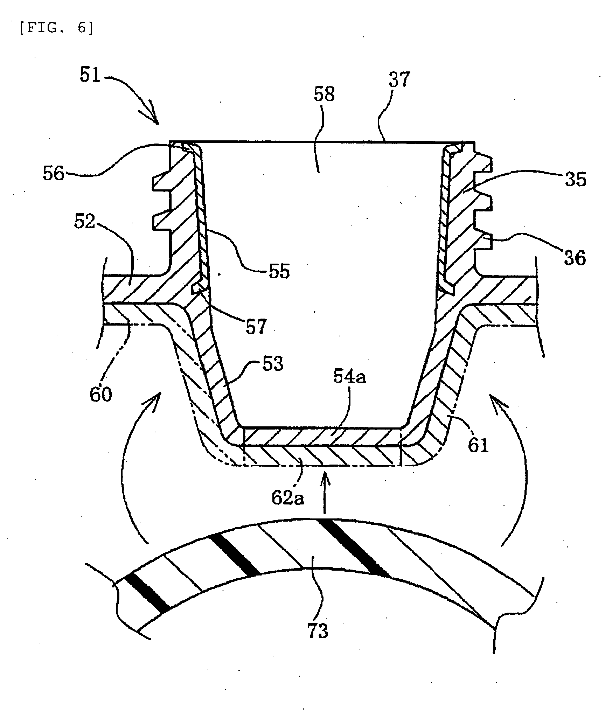

Fig. 4 shows an enlarged cross-sectional view of the fuel filler part with a fuel cap 50 attached thereto. Fig. 5 shows a cross-sectional view taken along the line 5-5 in Fig. 3. Fig. 6 shows a fuel filler component in blow-molding. As shown in Figs. 4 and 5, the upstanding portion 35 is formed of a fuel filler component 51 integrally formed with the flat portion 32. In other words, a portion protruding upward from the flat portion 32 of the fuel filler component 51 serves as the upstanding portion 35.

The fuel filler component 51 is formed by injection molding or the like using polyethylene resin or the like in advance separately from the fuel tank. A plate portion 52 forming a part of the flat portion 32 is integrally formed on the side surface of the fuel filler component 51, and extends substantially horizontally. A part, located below the plate portion 52, of the fuel filler component 51 forms a level plate portion 53 extending downward while being tapered downward. A lower opening 54 is formed in the lower end portion of the level plate portion 53 so as to communicate with the inside of the first fuel tank 20.

A cylindrical member 55 made of an appropriate metal such as iron is integrated on the inner circumferential side of the fuel filler component 51 by insert molding. The cylindrical member 55 has a cylindrical shape being tapered downward, and upper and lower opening edges thereof are rolled outward to form opening portions 56, 57. The opening portions 56 and 57 bite into the thick wall of the fuel filler component 51, thereby reinforcing the integration of the fuel filler component 51 and the cylindrical member 55. The cylindrical member 55 is exposed at the intermediate portion thereof on the inner circumferential surface of the fuel filler component 51.
The fuel filler component 51 has a hole penetrating therethrough in the axial direction thereof. The hole forms a fuel filler 58 and the upper end portion of the hole forms the opening portion 37 of the fuel filler.

A part, below the plate portion 52, of the fuel filler component 51 is integrated with an upper wall 60 of the first fuel tank 20. The upper wall 60 underlies the plate portion 52 and forms the flat portion 32 together with the plate portion 52. A part of the upper wall 60 forms an outer level plate portion 61 overlapping the outer side of the level plate portion 53. The level plate portion 53 and the outer level plate portion 61 are integrated to form a level plate 70.
A lower opening 62 is formed in the lower end portion of the outer level plate portion 61. The lower opening 62 is closed immediately after the blow molding, and the closed part is cut off together with a bottom portion, which is also closed, of the fuel filler component 51, so that the lower openings 54 and 62 are simultaneously formed.

As shown in Fig. 4, a male thread 63 is formed on a part, above the plate portion 52, of the fuel filler component 51, that is, on the outer circumferential part of the upstanding portion 35. An outer cylindrical portion 64 of the fuel cap 50 overlaps the outer side of the upstanding portion 35, so as to be fastened with a female thread 65 formed on the inner circumferential surface of the outer cylindrical portion 64. The upper portion of the outer cylindrical portion 64 forms a ceiling portion 66 where an inner cylindrical portion 67, which is inserted into the fuel filler 58, is integrally formed.
On the outer circumferential side of the inner cylindrical portion 67, a packing 68 is disposed in a region surrounded by the ceiling portion 66 and the outer cylindrical portion 64, so that the opening portion 56 of the cylindrical member 55 is in contact with the packing 68 for sealing. In this way, a gap between the ceiling portion 66 and the upper end of the upstanding portion 35 is sealed. Reference numeral 69 denotes a vent hole.

As shown in Fig. 5, the plate portion 52 is integrated with the mounting seat 42 and the mounting hole 41 for mounting the fuel sensor. The mounting seat 42 is provided to surround the mounting hole 41 for the fuel sensor, and integrated with an insert nut 71 provided therein by insert molding. The upper wall 60 overlaps, and is integrated with, a part, where the mounting hole 41 is provided, of the plate portion 52 from below. An opening 72 matching the mounting hole 41 is formed at the position, corresponding to the mounting hole 41, in the upper wall 60 so as to be integrated with the mounting hole 41. Reference symbol H in the figure indicates the height of the level plate 70, while the horizontal line L at the lower end portion of the outer level plate portion 61 indicates the fluid level at the time when the fuel tank is filled up.

Fig. 6 is a view for describing the insert molding for the upstanding portion 35. When the fuel tank is formed by blow molding, the fuel filler component 51 is set in an unillustrated mold in advance, and then, a parison 73 is expanded in the mold. A part of the expanded parison 73 thus overlaps the outer side of the level plate portion 53 so as to be tightly integrated with, the outer side, as the outer level plate portion 61. At this time, the level plate portion 53 has no opening portion formed at a bottom portion 54a thereof. The outer level plate portion 61 integrated after the blow molding is also integrate with a bottom portion 62a which corresponds to the lower opening 62 and which is cut off after the blow molding.

At the same time, the upper wall 60 overlaps the lower side of the plate portion 52 so as to be tightly integrated with the lower side. At this time, the mounting hole 41 (see Fig. 5) is also not formed. Then, the bottom portion 54a of the level plate portion 53 and the bottom portion 62a of the outer level plate 61, which are integrated with each other after the blow molding, are cut off together by blanking or the like, so that the lower openings 54 and 62 are formed. Also, the plate portion 52 and the upper wall 60 are cut off together at the portions thereof corresponding to the mounting hole 41 by blanking or the like, so that the mounting hole 41 and the opening 72 are formed (see Fig. 5).

Subsequently, the effect of this embodiment will be described. In Figs. 4 to 6, when the fuel filler component 51 is integrated with the flat portion 32 during the blow molding to form the upstanding portion 35, the fuel filler component 51 has the level plate portion 53 integrally provided thereon. For this reason, the outer level plate portion 61 is integrated with this level plate portion 53 at the outer side thereof. As a result, these level plate portion 53 and outer level plate portion 61 constitute the level plate 70.
This eliminates the need for positioning each time, as in the case of a separate level plate being inserted into and attached to a fuel filler having been molded. As a result, simple and precise positioning is achieved.

Also, since the fuel filler component 51, separately formed in advance, and the main body 30 are integrally molded, any special fixing member or seal is unnecessary to be provided for the level plate 70. As in the conventional case, only the packing 69 provided between the upstanding portion 35 and the fuel cap 50 suffice for sealing, leading to reduction in the number of components, and to a simple structure.

In addition, the cylindrical member 55 made of a metal is integrated, by insert molding, in only the part, above the plate portion 52, of the fuel filler component 51 corresponding to the upstanding portion 35. Accordingly, the toughness against falling down is improved, as well as the integration by the insert molding prevents looseness from occurring.

20: FIRST FUEL TANK, 30: MAIN BODY, 32: FLAT PORTION, 35: UPSTANDING PORTION, 36: MALE THREAD, 37: OPENING PORTION OF FUEL FILLER, 50: FUEL CAP, 51 FUEL FILLER COMPONENT, 52: PLATE PORTION, 53: LEVEL PLATE PORTION, 55: CYLINDRICAL MEMBER, 58: FUEL FILLER, 60: UPPER WALL, 61: OUTER LEVEL PLATE PORTION

## Claims

1. A fuel tank structure, comprising:
a resin fuel tank (20) molded by blow molding;
an upstanding portion (35) provided integrally to the resin fuel tank (20), the upstanding portion (35) standing upright in a cylindrical form; and
a fuel filler (58) provided in the upstanding portion (35), wherein
the upstanding portion (35) is formed by insert molding of a separate fuel filler component (51) in an integral manner at the time of the blow molding of the fuel tank (20), and
the fuel filler component (51) integrally includes a level plate portion (53) extending downward below an upper surface of the tank (20),
wherein a plate portion (52) is integrally formed on the side surface of the fuel filler component (51), and extending substantially horizontally, and the part, located below the plate portion (52), of the fuel filler component (51) forms the level plate portion (53) extending downward and being tapered downward, **characterized in that**
a part of an upper wall (60) of the fuel tank (20) forms an outer level plate portion (61) overlapping only the outer side of the level plate portion (53) so as to be tightly integrated therewith, which level plate portion (53) and outer level plate portion (61) are integrated to form a level plate (70), and
wherein the upper wall (60) underlies the plate portion (52) and forms a flat portion (32) of a hollow main body (30) of the fuel tank (20) together with the plate portion (52).

2. The fuel tank structure according to claim 1, wherein
the fuel filler component (51) is fabricated of a resin material by injection molding, and
a metallic ring (55) is cast into the fuel filler component (51) during the injection molding in only the part above the plate portion (52) of the fuel filler component (51) corresponding to the upstanding portion (35).

3. The fuel tank structure according to claim 2, wherein
the metallic ring (55) has a cylindrical shape being tapered downward, and upper and lower opening edges thereof are rolled outward to form opening portions (56, 57), wherein the opening portions (56, 57) bite into the thick wall of the fuel filler component (51), thereby reinforcing the integration of the fuel filler component (51) and the metallic ring (55), wherein the metallic ring (55) is exposed at the intermediate portion thereof on the inner circumferential surface of the fuel filler component (51).

4. The fuel tank structure according to any of the preceding claims, wherein the plate portion (52) is integrated with a mounting seat (42) and a mounting hole (41) for mounting a fuel sensor,
wherein the mounting seat (42) is provided to surround the mounting hole (41) for the fuel sensor, and integrated with an insert nut (71) provided therein by insert molding,
wherein the upper wall (60) overlaps, and is integrated with, a part, where the mounting hole (41) is provided, of the plate portion (52) from below, and
wherein an opening (72) matching the mounting hole (41) is formed at the position, corresponding to the mounting hole (41), in the upper wall (60) so as to be integrated with the mounting hole (41).

5. The fuel tank structure according to any of the preceding claims, wherein a lower opening (54) is formed in the lower end portion of the level plate portion (53) and a lower opening (62) is formed in the lower end portion of the outer level plate portion (61) after the blow molding so as to communicate with the inside of the fuel tank (20).

6. A method for producing a fuel tank structure, comprising the steps of:
- setting a fuel filler component (51) in a mold, wherein a plate portion (52) is integrally formed on the side surface of the fuel filler component (51), and extending substantially horizontally, and the part, located below the plate portion (52), of the fuel filler component (51) integrally forms a level plate portion (53) extending downward and being tapered downward,
- expanding a parison (73) in the mold by blow molding the parison so that a part of the expanded parison (73) thus overlaps the outer side of the level plate portion (53) so as to be tightly integrated with the outer side of the level plate portion (53) as an outer level plate portion (61), wherein the outer level plate portion (61) is a part of an upper wall (60) of the so blow molded resin fuel tank (20) and overlaps only the outer side of the level plate portion (53), which level plate portion (53) and outer level plate portion (61) are integrated to form a level plate (70), wherein the upper wall (60) underlies the plate portion (52) and forms a flat portion (32) of a hollow main body (30) of the fuel tank (20) together with the plate portion (52), wherein an upstanding portion (35) is formed by said insert molding of the separate fuel filler component (51) in an integral manner at the time of the blow molding of the fuel tank (20), wherein the upstanding portion (35) standing upright in a cylindrical form, and a fuel filler (58) is provided in the upstanding portion (35),
- simultaneously forming a lower opening (54) in the lower end portion of the level plate portion (53) and a lower opening (62) in the lower end portion of the outer level plate portion (61) by cutting off together a bottom portion (54a) of the level plate portion (53) and a bottom portion (62a) of the outer level plate (61), which are integrated with each other after the blow molding, by blanking or the like, so as to communicate with the inside of the fuel tank (20).

7. The method according to claim 6, wherein the fuel filler component (51) is fabricated of a resin material by injection molding before the step of setting the fuel filler component (51) in the mold, wherein a metallic ring (55) is cast into the fuel filler component (51) during the injection molding in only the part above the plate portion (52) of the fuel filler component (51) corresponding to the upstanding portion (35).

## Patentansprüche

1. Brennstofftankstruktur, die aufweist:
einen Kunstharzbrennstofftank (20), der durch Blasformung geformt ist;
einen aufrechten Abschnitt (35), der integriert mit dem Kunstharzbrennstofftank (20) bereitgestellt ist, wobei der aufrechte Abschnitt (35) in einer zylindrischen Form aufrecht steht; und
einen Brennstofffüller (58), der in dem aufrechten Abschnitt (35) bereitgestellt ist, wobei
der aufrechte Abschnitt (35) zur Zeit der Blasformung des Brennstofftanks (20) durch Umspritzen einer separaten Brennstofffüllerkomponente (51) in einer integralen Weise ausgebildet wird, und
die Brennstofffüllerkomponente (51) einen Niveauplattenabschnitt (53), der sich von einer oberen Oberfläche des Tanks (20) nach unten erstreckt, integral umfasst,
wobei ein Plattenabschnitt (52) auf einer Seitenoberfläche der Brennstofffüllerkomponente (51) integral ausgebildet ist und sich im Wesentlichen horizontal erstreckt, und der Teil, der sich unter dem Plattenabschnitt (52) der Füllerkomponente (51) befindet, den Niveauplattenabschnitt (53) bildet, der sich nach unten erstreckt und sich nach unten verjüngt,
**dadurch gekennzeichnet, dass** ein Teil einer oberen Wand (60) des Brennstofftanks (20) einen äußeren Niveauplattenabschnitt (61) bildet, der nur die Außenseite des Niveauplattenabschnitts (53) überlappt, um fest damit integriert zu sein, wobei der Niveauplattenabschnitt (53) und der äußere Niveauplattenabschnitt (61) integriert sind, um eine Niveauplatte (70) zu bilden, und
wobei die obere Wand (60) unter dem Plattenabschnitt (52) liegt und zusammen mit dem Plattenabschnitt (52) einen flachen Abschnitt (32) aus einem hohlen Hauptkörper (30) des Brennstofftanks (20) bildet.

2. Brennstofftankstruktur nach Anspruch 1, wobei
die Brennstofffüllerkomponente (51) durch Spritzgießen aus einem Kunstharzmaterial hergestellt ist, und
ein Metallring (55) während des Spritzgießens nur in dem Teil oberhalb des Plattenabschnitts (52) der Brennstofffüllerkomponente (51) entsprechend dem aufrechten Abschnitt (35) in die Brennstofffüllerkomponente (51) gegossen wird.

3. Brennstofftankstruktur nach Anspruch 2, wobei
der Metallring (55) eine zylindrische Form hat, die sich nach unten verjüngt, und obere und untere Öffnungsränder davon nach außen gerollt sind, um Öffnungsabschnitte (56, 57) zu bilden, wobei die Öffnungsabschnitte (56, 57) in die dicke Wand der Brennstofffüllerkomponente (51) greifen, wodurch die Integration der Brennstofffüllerkomponente (51) und des Metallrings (55) verstärkt wird, wobei der Metallring (55) an seinem Zwischenabschnitt auf der Innenumfangsoberfläche der Brennstofffiillerkomponente (51) freiliegt.

4. Brennstofftankstruktur nach einem der vorhergehenden Ansprüche, wobei der Plattenabschnitt (52) mit einem Montagesitz (42) und einem Montageloch (41) zum Montieren eines Brennstoffsensors integriert ist,
wobei der Montagesitz (42) derart bereitgestellt ist, dass er das Montageloch (41) für den Brennstoffsensor umgibt, und mit einer Einsatzmutter (71) integriert ist, die durch Umspritzen bereitgestellt wird,
wobei die obere Wand (60) einen Teil des Plattenabschnitts (52), wo das Montageloch (41) bereitgestellt ist, von unten überlappt und damit integriert ist, und
wobei eine Öffnung (72), die zu dem Montageloch (41) passt, an der Position, die dem Montageloch (41) entspricht, in der oberen Wand (60) ausgebildet ist, um mit dem Montageloch (41) integriert zu sein.

5. Brennstofftankstruktur nach einem der vorhergehenden Ansprüche, wobei nach dem Blasformen eine tiefere Öffnung (54) in dem unteren Endabschnitt des Niveauplattenabschnitts (53) ausgebildet wird und eine tiefere Öffnung (62) in dem unteren Endabschnitt des äußeren Niveauplattenabschnitts (61) ausgebildet wird, um mit dem Inneren des Brennstofftanks (20) in Verbindung zu stehen.

6. Verfahren zur Herstellung einer Brennstofftankstruktur, das die folgenden Schritte aufweist:
- Härten einer Brennstofffüllerkomponente (51) in einer Form, wobei ein Plattenabschnitt (52) auf der Seitenoberfläche der Brennstofffüllerkomponente (51) integral ausgebildet wird und sich im Wesentlichen horizontal erstreckt, und der Teil, der sich unter dem Plattenabschnitt (52) der Füllerkomponente (51) befindet, integral einen Niveauplattenabschnitt (53) bildet, der sich nach unten erstreckt und sich nach unten verjüngt,
- Ausdehnen eines Vorformlings (73) in der Form durch Blasformen des Vorformlings, so dass somit ein Teil des ausgedehnten Vorformlings (73) die Außenseite des Niveauplattenabschnitts (53) überlappt, um als ein äußerer Niveauplattenabschnitt (61) fest mit der Außenseite des Niveauplattenabschnitts (53) integriert zu werden, wobei der äußere Niveauplattenabschnitt (61) ein Teil einer oberen Wand (60) des auf diese Art blasgeformten Kunstharzbrennstofftanks (20) ist und nur die Außenseite des Niveauplattenabschnitts (53) überlappt, wobei der Niveauplattenabschnitt (53) und der äußere Niveauplattenabschnitt (61) integriert sind, um eine Niveauplatte (70) zu bilden, wobei die obere Wand (60) unter dem Plattenabschnitt (52) liegt und zusammen mit dem Plattenabschnitt (52) einen flachen Abschnitt (32) eines hohlen Hauptkörpers (30) des Brennstofftanks (20) bildet, wobei zur Zeit der Blasformung des Brennstofftanks (20) ein aufrechter Abschnitt (35) durch das Umspritzen der getrennten Brennstofffüllerkomponente (51) in einer integralen Weise ausgebildet wird, wobei der aufrechte Abschnitt (35) in einer zylindrischen Form aufrecht steht und ein Brennstofffüller (58) in dem aufrechten Abschnitt (35) bereitgestellt ist,
- gleichzeitiges Ausbilden einer tieferen Öffnung (54) in dem unteren Endabschnitt des Niveauplattenabschnitts (53) und einer tieferen Öffnung (62) in dem unteren Endabschnitt des äußeren Niveauplattenabschnitts (61) durch gemeinsames Durchtrennen eines unteren Abschnitts (54a) des Niveauplattenabschnitts (53) und eines unteren Abschnitts (62a) der äußeren Niveauplatte (61), die nach der Blasformung miteinander integriert werden, um mit dem Inneren des Brennstofftanks (20) in Verbindung zu stehen.

7. Verfahren nach Anspruch 6, wobei die Brennstofffüllerkomponente (51) vor dem Schritt des Härtens der Brennstofffüllerkomponente (51) in der Form durch Spritzgießen aus einem Kunstharzmaterial hergestellt wird, wobei während des Spritzgießens ein Metallring (55) nur in dem Teil oberhalb des Plattenabschnitts (52) der Brennstofffüllerkomponente (51), der dem aufrechten Abschnitt (35) entspricht, in die Brennstofffüllerkomponente (51) gegossen wird.

## Revendications

1. Structure de réservoir de carburant, comprenant :
un réservoir de carburant en résine (20) moulé par moulage par soufflage,
une portion verticale (35) disposée d'une seule pièce dans le réservoir de carburant en résine (20), la portion verticale (35) se tenant debout dans une forme cylindrique ; et
un dispositif de remplissage de carburant (58) disposé dans la portion verticale (35), dans laquelle
la portion verticale (35) est formée par moulage par insertion d'un composant de dispositif de remplissage de carburant séparé (51) d'une seule pièce au moment du moulage par soufflage du réservoir de carburant (20), et
le composant de dispositif de remplissage de carburant (51) comprend d'une seule pièce une portion de plaque de niveau (53) s'étendant vers le bas sous une surface supérieure du réservoir (20),
dans laquelle une portion de plaque (52) est formée d'une seule pièce sur la surface latérale du composant de dispositif de remplissage de carburant (51), et s'étendant sensiblement horizontalement, et la partie, sous la portion de plaque (52), du composant de dispositif de remplissage de carburant (51) forme la portion de plaque de niveau (53) s'étendant vers le bas et étant effilée vers le bas,
**caractérisée en ce qu'**une partie d'une paroi supérieure (60) du réservoir de carburant (20) forme une portion de plaque de niveau externe (61) chevauchant uniquement le côté externe de la portion de plaque de niveau (53) de façon à être étroitement intégrée avec celle-ci, lesquelles portion de plaque de niveau (53) et portion de plaque de niveau externe (61) sont intégrées pour former une plaque de niveau (70), et
dans laquelle la paroi supérieure (60) est sous la portion de plaque (52) et forme une portion plate (32) d'un corps principal creux (30) du réservoir de carburant (20) conjointement avec la portion de plaque (52).

2. Structure de réservoir de carburant selon la revendication 1, dans laquelle
le composant de dispositif de remplissage de carburant (51) est fabriqué en un matériau de résine par moulage par injection, et
une bague métallique (55) est coulée dans le composant de dispositif de remplissage de carburant (51) pendant le moulage par injection uniquement dans la partie au-dessus de la portion de plaque (52) du composant de dispositif de remplissage de carburant (51) correspondant à la portion verticale (35).

3. Structure de réservoir de carburant selon la revendication 2, dans laquelle
la bague métallique (55) a une forme cylindrique effilée vers le bas, et ses bords d'ouverture supérieur et inférieur sont enroulés vers l'extérieur pour former des portions d'ouverture (56, 57), dans laquelle les portions d'ouverture (56, 57) mordent dans la paroi épaisse du composant de dispositif de remplissage de carburant (51), renforçant ainsi l'intégration du composant de dispositif de remplissage de carburant (51) et de la bague métallique (55), dans laquelle la bague métallique (55) est exposée au niveau de sa portion intermédiaire sur la surface circonférentielle interne du composant de dispositif de remplissage de carburant (51).

4. Structure de réservoir de carburant selon l'une quelconque des revendications précédentes, dans laquelle la portion de plaque (52) est intégrée à un siège de montage (42) et un trou de montage (41) pour le montage du capteur de niveau de carburant,
dans laquelle le siège de montage (42) est disposé pour entourer le trou de montage (41) pour le capteur de niveau de carburant, et intégré à un écrou d'insert (71) y étant disposé par moulage par insertion,
dans laquelle la paroi supérieure (60) chevauche, et est intégrée à, une partie, où le trou de montage (41) est disposé, de la portion de plaque (52) par le dessous, et
dans laquelle une ouverture (72) concordant avec le trou de montage (41) est formée au niveau de la position, correspondant au trou de montage (41), dans la paroi supérieure (60) de façon à être intégrée au trou de montage (41).

5. Structure de réservoir de carburant selon l'une quelconque des revendications précédentes, dans laquelle une ouverture inférieure (54) est formée dans la portion d'extrémité inférieure de la portion de plaque de niveau (53) et une ouverture inférieure (62) est formée dans la portion d'extrémité inférieure de la portion de plaque de niveau externe (61) après le moulage par soufflage de façon à communiquer avec l'intérieur du réservoir de carburant (20).

6. Procédé de production d'une structure de réservoir de carburant, comprenant les étapes de :
- ajustement d'un composant de dispositif de remplissage de carburant (51) dans un moule, dans lequel une portion de plaque (52) est formée d'une seule pièce sur la surface latérale du composant de dispositif de remplissage de carburant (51), et s'étendant sensiblement horizontalement, et la partie, située sous la portion de plaque (52) du composant de dispositif de remplissage de carburant (51) forme d'une seule pièce une portion de plaque de niveau (53) s'étendant vers le bas et effilée vers le bas,
- dilatation d'une paraison (73) dans le moule par moulage par soufflage de la paraison de sorte qu'une partie de la paraison dilatée (73) chevauche ainsi le côté externe de la portion de plaque de niveau (53) de façon à être étroitement intégrée au côté externe de la portion de plaque de niveau (53) en tant que portion de plaque de niveau externe (61), dans lequel la portion de plaque de niveau externe (61) est une partie d'une paroi supérieure (60) du réservoir de carburant en résine moulé par soufflage (20) et chevauche uniquement le côté externe de la portion de plaque de niveau (53), lesquelles portion de plaque de niveau (53) et portion de plaque de niveau externe (61) sont intégrées pour former une plaque de niveau (70), dans lequel la paroi supérieure (60) est sous la portion de plaque (52) et forme une portion plate (32) d'un corps principal creux (30) du réservoir de carburant (20) conjointement avec la portion de plaque (52), dans lequel une portion verticale (35) est formée par ledit moulage par insertion du composant de dispositif de remplissage de carburant séparé (51) d'une seule pièce au moment du moulage par soufflage du réservoir de carburant (20), dans lequel la portion verticale (35) se tient debout dans une forme cylindrique, et un dispositif de remplissage de carburant (58) est disposé dans la portion verticale (35),
- formation simultanée d'une ouverture inférieure (54) dans la portion d'extrémité inférieure de la portion de plaque de niveau (53) et d'une ouverture inférieure (62) dans la portion d'extrémité inférieure de la portion de plaque de niveau externe (61) par découpe conjointe d'une portion de fond (54a) de la portion de plaque de niveau (53) et une portion de fond (62a) de la plaque de niveau externe (61), qui sont intégrées l'une à l'autre après le moulage par soufflage, par poinçonnage ou similaire, de façon à communiquer avec l'intérieur du réservoir de carburant (20).

7. Procédé selon la revendication 6, dans lequel le composant de dispositif de remplissage de carburant (51) est fabriqué en un matériau de résine par moulage par injection avant l'étape d'ajustement du composant de dispositif de remplissage de carburant (51) dans le moule, dans lequel une bague métallique (55) est coulée dans le composant de dispositif de remplissage de carburant (51) pendant le moulage par injection uniquement dans la partie au-dessus de la portion de plaque (52) du composant de dispositif de remplissage de carburant (51) correspondant à la portion verticale (35).
